# EUROPÄISCHE PATENTANMELDUNG

(11) **EP 4 559 664 A2**
(43) Veröffentlichungstag der Anmeldung: **28.05.2025**
(21) Anmeldenummer: 24206470.7
(22) Anmeldetag: 14.10.2024
(51) Int. Cl.: B29C 64/118, B29C 64/30, B29C 64/314, B33Y 10/00, B33Y 30/00, B33Y 40/00, B29C 64/209, B29C 48/09, B29C 48/13, B29C 48/30

(54) **VERFAHREN ZUM WERKZEUGLOSEN HERSTELLEN EINER HOHLSTRUKTUR**

(30) Priorität: 24.11.2023 DE 102023132852
(71) Anmelder: Technische Universität Darmstadt, 64289 Darmstadt (DE)
(72) Erfinder: WÜST, Philipp, 64287 Darmstadt (DE); DÖRSAM, Edgar, 63179 Obertshausen (DE); PARCIC, Tarik, 64295 Darmstadt (DE); SINGH, Hemant, 60488 Frankfurt am Main (DE); CAHILL, Melissa Maria, 64295 Darmstadt (DE); GRANSOW, Philip, 64285 Darmstadt (DE); FREUDENBERG, Jakob, 64387 Darmstadt (DE)
(74) Vertreter: LifeTech IP Spies & Behrndt Patentanwälte PartG mbB

(57) **Zusammenfassung**

Offenbart ist ein Verfahren zum werkzeuglosen Herstellen einer Hohlstruktur (10), wobei die Hohlstruktur (10) einen entlang einer Achse der Hohlstruktur (10) variierenden Querschnitt aufweist. Das Verfahren umfasst ein Extrudieren (Sno) eines Extrusionsmaterials (30) sowie während des Extrudierens (S110) ein Einbringen (S120) eines Wirkmediums (50) in ein Inneres (38) des Extrusionsmaterials (30), um basierend darauf die Hohlstruktur (10) mit dem variierenden Querschnitt herzustellen.

## Beschreibung

Die vorliegende Erfindung bezieht sich auf ein Verfahren und eine Vorrichtung zum werkzeuglosen Herstellen einer Hohlstruktur, und insbesondere auf ein werkzeugloses, kontinuierliches Freiform-Verfahren zur Herstellung in ihrer Größe veränderlicher Hohlstrukturen, beispielsweise im 3D-Druck oder der robotischen Fertigung.

### HINTERGRUND

Die Herstellung von Kunststoffgegenständen kennt verschiedene Verfahren, die sich der Extrusion von erhitzter Kunststoffmasse bedienen. So wird etwa im Extrusionsblasformen Extrusionsmaterial aus einer Düse extrudiert, um einen schlauchförmigen Vorformling zu erzeugen. Der Vorformling wird in ein Blasformwerkzeug gegeben, das häufig aus zwei Teilen besteht, die um den Vorformling geschlossen werden. Durch eine Einführung von Luft wird der Vorformling unter Druck gegen eine Innenwand des Blasformwerkzeugs gepresst, um so einen Hohlkörper in einer dem Blasformwerkzeug entsprechenden Form zu erzeugen.

In den Extrusionsverfahren ist allgemein bekannt, Koaxialdüsen zur Koextrusion mehrerer Werkstoffe bzw. mehrerer Extrusionsmaterialien einzusetzen. Den Extrusionsmaterialien können Fasern zugesetzt werden, die sich verstärkend auf das Erzeugnis auswirken.

Extrusionsverfahren finden auch in der additiven Fertigung Verwendung. In der additiven Fertigung werden Hohlstrukturen zeitintensiv Schicht für Schicht realisiert. Insbesondere für Überhänge werden aufgrund einer unzureichenden Biegesteifigkeit der einzelnen Schichten Stützstrukturen benötigt; eine Fertigung frei im Raum ist in der Regel nicht möglich. In der konventionellen Fertigung werden üblicherweise weitere Werkzeuge eingesetzt, um Hohlstrukturen nach dem Drucken zu bearbeiten.

Die Extrusionstechnik wird in der additiven Fertigung etwa in der sogenannten Fused Filament Fabrication eingesetzt. Dazu wird in einer Düse ein langes Filament des Kunststoffs gepresst und Lage für Lage abgelegt.

Dabei sind insbesondere Verfahren bekannt, in denen Extrusionsmaterial schlauchförmig extrudiert wird. So offenbart etwa die Schrift N. Hopkins, R.J. van Vuuren, H. Brooks: "Additive Manufacturing via Tube Extrusion (AMTEx)", in: Additive Manufacturing, Volume 36, Dezember 2020, S. 101606, eine Herstellung eines Gegenstands aus einem Schlauch aus Extrusionsmaterial in einer Schichtbauweise. Die Schrift WO 2022 029 211 A1 offenbart einen 3D-Druck thermoplastischer Filamente mit Hohlquerschnitten, in denen ein Schlauch mit Extrusionsmaterial ummantelt wird.

Allen genannten Verfahren ist gemein, dass eine Hohlstruktur mit variablem Querschnitt in mehreren, nacheinander ablaufenden Schritten erzeugt wird. Um einen Hohlkörper mit variierendem Querschnitt unmittelbar zu extrudieren, sind besondere Düsen bekannt, die sich mechanisch verändern und dadurch das Extrusionsmaterial in unterschiedlichen Querschnitten extrudieren. Eine solche Düse ist beispielsweise in der Schrift EP 0 468 260 B1 offenbart. Ein Nachteil dieser Düsen ist ein gegenüber einfachen Düsen oder auch Koaxialdüsen erhöhter Herstellungsaufwand.

Es besteht weiterhin ein Bedarf nach Extrusionsverfahren, in denen effizient und kostengünstig Hohlstrukturen mit variierendem Querschnitt erzeugt werden können.

### KURZBESCHREIBUNG DER ERFINDUNG

Ein Beitrag dazu wird durch ein Verfahren zum werkzeuglosen Herstellen einer Hohlstruktur nach Anspruch 1 und eine Vorrichtung zum werkzeuglosen Herstellen einer Hohlstruktur nach Anspruch 7 erreicht. Die abhängigen Ansprüche beziehen sich auf vorteilhafte Weiterbildungen der Gegenstände der unabhängigen Ansprüche.

Die vorliegende Erfindung bezieht sich auf ein Verfahren zum werkzeuglosen Herstellen einer Hohlstruktur, die einen entlang einer Achse der Hohlstruktur variierenden Querschnitt aufweist. Das Verfahren umfasst ein Extrudieren eines Extrusionsmaterials und, während des Extrudierens, ein Einbringen eines Wirkmediums in ein Inneres des Extrusionsmaterials, um basierend auf dem Extrudieren und dem Einbringen die Hohlstruktur mit dem variierenden Querschnitt herzustellen.

Ein werkzeugloses Herstellen soll dabei ein Herstellen bezeichnen, das keine weiteren Werkzeuge im engeren Sinne verwendet. Werkzeuge können dabei in engerem Sinne verstanden werden als einfache Maschinen zur Umwandlung einer Kraft, die eingesetzt werden, um auf ein herzustellendes Werkstück mechanisch einzuwirken. Zu den weiteren Werkzeugen sollen hierbei insbesondere auch Blasformwerkzeuge gezählt werden, also Werkzeuge, in denen das extrudierte Extrusionsmaterial z.B. in Gestalt eines Vorformlings eingebracht wird, um dann durch Druckaufbau aus einem Inneren gegen das Blasformwerkzeug gepresst zu werden und so seine Form zu erhalten. Werkzeugloses Herstellen kann somit insbesondere ein Herstellen ohne einen Einsatz einer Form, bzw. eines formgebenden bzw. formverleihenden Werkzeugs, verstanden werden. Werkzeugloses Herstellen kann zudem insbesondere ein rein generatives Herstellen sein, das ein Erzeugnis allein durch Zufügen von Material, also ohne ein Abtragen von Material, erzeugt.

Die Hohlstruktur kann eine Struktur sein, die eine Hülle oder einen Mantel um einen Hohlraum umfasst, wobei der Hohlraum mit einem von der Hülle oder Mantel abgrenzbaren Stoff, insbesondere mit Luft oder mit dem Wirkmedium, gefüllt sein kann. Die Hülle bzw. der Mantel der Hohlstruktur wird durch das Extrusionsmaterial gebildet. Das Extrusionsmaterial kann ein Kunststoff oder auch ein Baustoff wie z.B. ein Mörtel oder ein Beton, oder auch etwa ein Zement sein.

Das Extrudieren kann als ein Pressen bzw. Ausführen des Extrusionsmaterials unter Druck in kontinuierlicher Weise aus einer formgebenden Öffnung insbesondere einer Extrusionsdüse verstanden werden. Die Düse kann dabei über einen Kern verfügen, so dass das Extrusionsmaterial aus einer topologisch ringförmigen Öffnung gepresst wird. In Ausführungsbeispielen verfügt die Düse allerdings nicht notwendigerweise über einen Kern; die Öffnung weist dann die Topologie einer Kreisscheibe auf. Der Begriff "topologisch" bzw. "Topologie" soll hierbei darauf hinweisen, dass die Öffnung nicht notwendigerweise eine Rotationssymmetrie aufweisen muss; sie kann vielmehr jede Form haben, welche dieselbe Topologie aufweist. Insbesondere kann die Öffnung etwa durch eine oder mehrere polygonale Flächen oder Konturen gegeben sein. Die Hohlstruktur wird durch das Verfahren in Ausführungsbeispielen "am Stück", also kontinuierlich, oder zumindest abschnittsweise kontinuierlich hergestellt.

Die Achse der Hohlstruktur kann durch eine Extrusionsrichtung, also eine Richtung, in die das Extrusionsmaterial extrudiert wird, gegeben sein. Die Achse kann somit insbesondere durch eine Achse der Düse bestimmt sein. Die Achse der Hohlstruktur kann auch durch eine Ablagerichtung des Extrusionsmaterials gegeben sein. Die Hohlstruktur muss bezüglich der Achse nicht notwendigerweise eine Rotationssymmetrie aufweisen.

Der Querschnitt umfasst eine Kontur der Hohlstruktur und insbesondere der Hülle bzw. des Mantels in einer rechtwinklig auf die Achse stehenden Ebene. Der Querschnitt variiert, wenn sich entlang der Achse die Kontur lokal verändert. Die Hohlstruktur weist somit an mindestens zwei Punkten der Achse in entsprechenden Querschnitten der Hohlstruktur unterschiedliche Konturen auf. In Ausführungsbeispielen variiert ein Radius des Mantels; insbesondere kann für einen festen Azimutalwinkel bezüglich der Achse ein Abstand des Mantels zu der Achse als Funktion über der Achse nicht-konstant sein.

Das Wirkmedium kann ein Fertigungshilfsmittel sein, das durch Ausüben eines Drucks auf das Extrusionsmaterial und/oder durch eine in oder an dem Extrusionsmaterial bewirkte chemische Reaktion Veränderungen an dem extrudierten Extrusionsmaterial hervorruft. Das Wirkmedium kann feste Teilchen, beispielsweise ein Granulat, umfassen. Das Wirkmedium kann zumindest teilweise gasförmig oder flüssig sein. In Ausführungsbeispielen ist das Wirkmedium eine Flüssigkeit oder ein Gas. In Ausführungsbeispielen ist das Wirkmedium Luft. Das Wirkmedium ist allerdings nicht als Stützstruktur zu verstehen. Insbesondere ist das Wirkmedium nicht selbst eine Struktur, die mit dem Extrusionsmaterial in Kontakt tritt, um das Extrusionsmaterial an einzelnen Stellen abzustützen; vielmehr wirkt das Wirkmedium lokal kontinuierlich auf das Extrusionsmaterial ein. Das Wirkmedium besteht insgesamt aus einem Material oder einer Materialmischung, die es von dem Extrusionsmaterial unterscheidet.

Das Einbringen des Wirkmediums erfolgt in ein Inneres des Mantels bzw. der Hülle, die durch das Extrusionsmaterial gebildet wird. In Ausführungsbeispielen wird das Wirkmedium durch die Extrusionsdüse in das Extrusionsmaterial eingebracht. Dazu kann das Wirkmedium bereits in einem Inneren der Düse von dem Extrusionsmaterial umfasst werden bzw. das Extrusionsmaterial an eine Wand der Düse pressen. Die Düse kann auch einen Kern umfassen, um den herum das Extrusionsmaterial extrudiert wird; in solchen Ausführungsbeispielen kann das Wirkmedium durch einen Kanal im Kern in das Extrusionsmaterial eingebracht werden. Das Einbringen erfolgt während des Extrudierens, also in unmittelbarer zeitlicher Nähe oder Abfolge, und in Ausführungsbeispielen auch zusammen mit dem Extrudieren durch dieselbe Düse.

In dem Verfahren kann ein Gegenstand, z.B. ein Bauteil, unmittelbar hergestellt werden; die Hohlstruktur kann also unmittelbar einer angestrebten Form entsprechen.

Optional umfasst das Verfahren jedoch ein schichtweises Ablegen der Hohlstruktur für ein additives Fertigen. Die Hohlstruktur mit dem variierenden Querschnitt kann somit eingesetzt werden, um einen Gegenstand bzw. eine angestrebte Form schichtweise im Sinne einer additiven Fertigung zu bilden.

Das Verfahren kann somit Teil eines additiven Fertigungsverfahrens sein. Insbesondere kann es auch ein schichtweises Ablegen der Hohlstruktur umfassen, um so ein Bauteil zu erzeugen.

Optional basiert der variierende Querschnitt insbesondere auf dem Extrudieren des Extrusionsmaterials mit einer variierenden Geschwindigkeit. Das Wirkmedium kann also für das Einbringen temporär beschleunigt oder gebremst werden. Das Variieren der Geschwindigkeit ist hier zeitlich zu verstehen; es erfolgt so, dass es den variierenden Querschnitt der Hohlstruktur bewirkt oder mitbewirkt bzw. bestimmt oder mitbestimmt.

Alternativ oder zusätzlich basiert der variierende Querschnitt auf einer Bewegung oder Relativbewegung der formgebenden Öffnung. Insbesondere kann die Extrusionsdüse zeitlich variierend ausgelenkt, gedreht oder gekippt werden, und/oder eine Form der formgebenden Öffnung in der Extrusionsdüse kann zeitlich variiert werden, um so den variierenden Querschnitt zu bewirken oder mitzubewirken.

Alternativ oder zusätzlich basiert der variierende Querschnitt auf dem Einbringen des Wirkmediums mit einem variierenden Volumenstrom. Es können also unterschiedliche Volumina des Wirkmediums pro Zeiteinheit in das Innere des Extrusionsmaterials eingebracht werden, um so den variierenden Querschnitt zu bewirken oder mitzubewirken.

Alternativ oder zusätzlich basiert der variierende Querschnitt auf dem Einbringen des Wirkmediums mit einem variierenden Druck. Es kann also ein Druck im Wirkmedium während des Einbringens kontrolliert werden, um so den variierenden Querschnitt zu bewirken oder mitzubewirken. Das Einbringen des Wirkmediums bewirkt einen Druck auf das Extrusionsmaterial, der den Querschnitt bzw. eine Ausdehnung des Hohlkörpers bestimmt. Der Druck, den das Wirkmedium auf das Extrusionsmaterial ausübt, kann insbesondere auch durch ein Verändern eines Außendrucks (also einem Druck in einem Äußeren des Extrusionsmaterials bzw. der Hohlstruktur während des Extrudierens und Einführens) angepasst werden.

Alternativ oder zusätzlich basiert der variierende Querschnitt auf dem Einbringen des Wirkmediums mit einer variierenden Temperatur. Es kann also die Temperatur des Wirkmediums für das Einbringen zeitlich verändert werden, um so den variierenden Querschnitt zu bewirken oder mitzubewirken.

Alternativ oder zusätzlich basiert der variierende Querschnitt auf einem Wechsel des Wirkmediums oder einer Zusammensetzung des Wirkmediums. Es können beispielsweise zeitlich versetzt unterschiedliche Wirkmedien eingesetzt oder ein Zusatzstoff in variierendem Anteil eingeführt werden, um so den variierenden Querschnitt zu bewirken oder mitzubewirken.

In Ausführungsbeispielen beruht der variierende Querschnitt auf einem Zusammenspiel mehrerer der vorangehend genannten Optionen.

Optional ist das Extrusionsmaterial ein thermoplastisches Material. Es kann somit ein Kunststoff sein, der sich innerhalb eines bestimmten Temperaturbereichs reversibel verformen lässt. Das Extrusionsmaterial kann beispielsweise ein Acrylnitril-Butadien-Styrol-Copolymer, ABS, ein Polyamid, ein thermoplastisches Elastomer, Acrylester-Styrol-Acrylnitril, ASA, Polyethylentherephthalat, PET, Iglidur, ein Polyetherimid oder ein Polyactid umfassen. Das Extrusionsmaterial kann Fasern wie etwa Polyamid- oder Carbonfasern umfassen; dies kann eine Verstärkung oder eine verbesserte Dehnbarkeit der Hohlstruktur bewirken.

In Ausführungsbeispielen des Verfahrens hat sich insbesondere Glykol-modifiziertes Polyethylentheraphthalat, PETG, als vorteilhaft erwiesen.

Optional ist das Extrusionsmaterial ein Kunststoffdraht, bzw. weist das Extrusionsmaterial die Form eines Drahts auf. Unter dem Begriff Kunststoffdraht kann ein drahtförmiger, insbesondere thermoplastischer Werkstoff verstanden werden. Der Kunststoffdraht kann beispielsweise als durchgängiger Strang auf einer Spule vorkonfektioniert sein. In Ausführungsbeispielen kann der Kunststoffdraht ein herkömmliches 3D-Druck-Filament sein. Dieses kann bevorzugt einen Drahtdurchmesser von 1,75 oder 2,85 mm aufweisen. Der Kunststoffdraht kann aber auch einen anderen als typische Durchmesser von herkömmlichen 3D-Druck-Filamenten aufweisen. Die Nutzung eines Kunststoffdrahts hat sich in weiteren Ausführungsbeispielen des Verfahrens insbesondere gegenüber Alternativen wie Granulaten oder Pellets als besonders vorteilhaft herausgestellt. So kann der Kunststoffdraht für das Extrudieren durch eine kleinere Aufschmelzeinheit aufgeschmolzen werden. Weiter hat sich gezeigt, dass der Kunststoffdraht sich besser dosieren lässt. Von besonderem Vorteil ist, dass der Kunststoffdraht während des Extrudierens und auch während des Einbringens des Wirkmediums zurückgezogen werden kann, was in dem Zusammenhang mit dem Einbringen des Wirkmediums eine größere Formenvielfalt bei der Gestaltung der Hohlstruktur mit variablem Querschnitt ermöglicht. Das Verfahren kann somit ein Zurückziehen des als Kunststoffdraht ausgeführten Extrusionsmaterials umfassen. Dieser Schritt kann während bzw. im Wechsel mit dem Extrudieren durchgeführt werden. Als weiterer Vorteil gegenüber Granulaten und Pellets erlaubt eine Ausführung des Extrusionsmaterials als Kunststoffdraht ein Abschneiden des Extrusionsmaterials bzw. Kunststoffdrahts und Anfügen eines weiteren Extrusionsmaterials bzw. Kunststoffdrahts. Auf diese Weise lässt sich ein Wechsel in einer Eigenschaft des Materials der entstehenden Hohlstruktur erreichen. Der Wechsel kann beispielsweise eine Farbe, die Steifigkeit, eine Härte oder sonst eine physikalische Eigenschaft oder auch das Material selbst betreffen. Das Abschneiden und Anfügen kann durch ein Zuschneiden eines extrudierten Kunststoffdrahts und ein Verschmelzen mit einem weiteren Kunststoffdraht erfolgen.

Auch das Wirkmedium kann als Kunststoffdraht, beispielsweise in Ausprägung eines in Wasser oder Limonen löslichen Materials in schmelzflüssiger Form, ausgeführt werden.

Optional umfasst das Verfahren ein Temperieren, also ein Abkühlen oder Erhitzen, des Extrusionsmaterials durch ein Temperiermedium in einem Äußeren des Extrusionsmaterials und/oder durch lokal eingebrachte Energie aus einem Äu-βeren des Extrusionsmaterials umfasst, wobei der variierende Querschnitt auf dem Temperieren basiert.

Das Temperieren von außen bewirkt somit den variierenden Querschnitt mit. Es kann sich insbesondere auch auf eine Dauer einer Aushärtung auswirken. Das Temperiermedium kann Luft oder ein Gas sein. Die Energie kann lokal beispielsweise durch Laser- oder Infrarotlicht eingebracht werden.

Optional umfasst das Wirkmedium ein Photopolymer. Dieses kann beispielsweise bewirken, dass die hergestellte Hohlstruktur einen Selbstheilungseffekt bei Verletzungen des Mantels bzw. der Hülle aufweist.

Alternativ oder zusätzlich umfasst das Wirkmedium ein thermochromes Material. Dieses kann organisch wie beispielsweise ein Flüssigkristall, Leukofarbstoff, ein Polymer, oder eine thermochrome Tinte sein. Das thermochrome Material kann auch anorganisch, beispielsweise ein Schwermetalltetraiodmercurat sein.

Alternativ oder zusätzlich umfasst das Wirkmedium ein solvatorchromes Material, das ausgebildet ist, um in Abhängigkeit einer Lösungsflüssigkeit oder eines Lösungsgels eine unterschiedliche Farbe zu bewirken. Die Lösungsflüssigkeit bzw. das Lösungsgel kann in der Hohlstruktur abschnittsweise unterschiedlich sein.

Alternativ oder zusätzlich umfasst das Wirkmedium ein Phasenwechselmaterial, das ausgebildet ist, bei einem bestimmten Temperaturübergang einen Phasenübergang durchzuführen. Das Phasenwechselmaterial kann unmittelbar Teil des Wirkmediums bzw. das Wirkmedium selbst sein. Das Phasenwechselmaterial kann auch als Zusatzstoff, z.B. eingekapselt, im Wirkmedium enthalten sein. Auf diese Weise kann ein wärmeisolierender Effekt erzielt werden.

Alternativ oder zusätzlich umfasst das Wirkmedium ein Gas oder ein Gasgemisch, wie z.B. Luft.

Optional ist das Wirkmedium ein in Wasser oder Limonen (monozyklischem Monoterpen) löslicher Stoff und/oder ein Thermoplast. Das Wirkmedium kann insbesondere ein schnell zu einem Feststoff erstarrendes Material sein, das dadurch deutlich bessere Stützwirkung für die Hohlstruktur bzw. das extrudierte Extrusionsmaterial als beispielsweise ein Gas oder eine Flüssigkeit aufweist. Ein thermoplastisches Wirkmedium kann beispielsweise ein Polyvinylalkohol, PVOH oder ein Polystyrol, PS, sein. Der Feststoff ist dann aber löslich, so dass er nachträglich aus der Hohlstruktur herausgespült werden kann. Das Verfahren kann dann somit ein Lösen, basierend auf Wasser oder Limonen, des Wirkmediums aus dem Inneren des Extrusionsmaterials umfassen, um so die Hohlstruktur herzustellen.

In weiteren Ausführungsbeispielen ist das Wirkmedium insbesondere ein Thermoplast bzw. ein thermoplastisches Material, der bzw. das ähnlich extrudiert werden kann wie das Extrusionsmaterial selbst. Der Thermoplast erstarrt nach dem Einbringen und kann somit wie beschrieben eine viel bessere Stützwirkung für die Hohlstruktur bzw. das extrudierte Extrusionsmaterial bieten. Der Thermoplast muss nicht wasserlöslich sein, kann aber eine Schmelztemperatur aufweisen, die unterhalb einer Schmelztemperatur des Extrusionsmaterials liegt, so dass der Thermoplast verflüssigt werden kann. Das Verfahren kann dann somit ein Lösen, basierend auf einem Erhitzen, des Wirkmediums aus dem Inneren des Extrusionsmaterials umfassen, um so die Hohlstruktur herzustellen. Mögliche Thermoplaste können Polybutylensuccinat, PBS, oder Polyethylen, PE, sein. In weiteren Ausführungsbeispielen ist der Thermoplast selbst wasserlöslich.

Optional ist das Wirkmedium ausgebildet, um bei Kontakt mit dem Extrusionsmaterial unter geeigneten äußeren Bedingungen (insbesondere etwa von Druck und Temperatur) einen Schmelzprozess an einer Oberfläche des Extrusionsmaterials zu bewirken. Dies kann beispielsweise eine Versteifung oder auch ein Versiegeln des Extrusionsmaterials bewirken. Allgemein können auf diese Weise mechanische Eigenschaften des Extrusionsmaterials und damit der hergestellten Hohlstruktur beeinflusst werden.

Ausführungsbeispiele beziehen sich auch auf eine Vorrichtung zur werkzeuglosen Herstellung einer Hohlstruktur, wobei die Hohlstruktur einen entlang einer Achse der Hohlstruktur variierenden Querschnitt aufweist. Die Vorrichtung umfasst eine Extrusionsdüse bzw. Kombinationseinheit für eine Extrusion eines Extrusionsmaterials, wobei die Extrusionsdüse ausgebildet ist, um während der Extrusion ein Wirkmedium in ein Inneres des Extrusionsmaterials einzubringen. Die Vorrichtung umfasst weiter eine Steuerungseinrichtung, die ausgebildet ist, um das Extrusionsmaterial durch die Extrusionsdüse zu extrudieren und das Wirkmedium einzubringen, und um basierend darauf die Hohlstruktur mit dem variierenden Querschnitt herzustellen.

Die Extrusionsdüse kann beispielsweise noch in einem Inneren der Extrusionsdüse das Wirkmedium in das Extrusionsmaterial einleiten. Durch eine Form der Extrusionsdüse kann erreicht werden, dass das Extrusionsmaterial gegen eine Wand im Inneren der Extrusionsdüse gepresst wird, so dass sich das Wirkmedium bei einem Austreten gemeinsam mit dem Extrusionsmaterial aus der Düse in dem Inneren des Extrusionsmaterials befindet.

Optional umfasst die Düse einen Kern und ist ausgebildet, um das Extrusionsmaterial um den Kern herum zu extrudieren. Dabei weist der Kern einen Kanal auf, der ausgebildet ist, um durch den Kanal das Wirkmedium in das Innere des Extrusionsmaterial einzubringen.

Optional weist der Kern einen flexiblen Formkörper auf, der aus einer Extrusionsöffnung der Düse herausragt. Dadurch kann ein Temperieren des Extrusionsmaterials nach dem Austreten aus der Düse, aber noch vor dem Einbringen des Wirkmediums ermöglicht werden. Weiter kann ein Leiten des Extrusionsmaterials nach Austritt aus der formgebenden Öffnung erreicht werden.

Ausführungsbeispiele beziehen sich auch auf ein Computerprogrammprodukt mit darauf gespeicherten Instruktionen, die bei Ausführung der Instruktionen durch eine datenverarbeitende Maschine diese veranlassen, ein Verfahren der vorangehend beschriebenen Art durchzuführen.

Wichtige Aspekte des Verfahrens und der Vorrichtung können auch wie folgt zusammengefasst werden.

Offenbart ist ein werkzeugloses, ggf. additives Fertigungsverfahren zur kontinuierlichen, extrusionsbasierten Herstellung dreidimensionaler Bauteile aus thermoplastischen Extrusionsmaterialien mit variablem Hohlquerschnitt. Dabei werden Hohlstrukturen intrinsisch gefertigt; die Hohlstrukturen werden also direkt, werkzeuglos, kontinuierlich und frei im Raum extrudiert. Der Durchmesser wird unmittelbar durch Beaufschlagung mit Innendruck mittels eines Wirkmediums verändert. Auf diese Weise werden dreidimensionale Hohlstrukturen mit variierendem bzw. variablem Querschnitt gefertigt. Ein wichtiger Aspekt des Verfahrens ist somit die Ausführung der Verwendung des Innendrucks, der hier durch das Wirkmedium während bzw. in zeitlich unmittelbarem Zusammenhang mit dem Extrudieren aufgebracht wird und die Querschnittsveränderung bewirkt. Durch die direkte Fertigung des Hohlquerschnitts kann der schichtenweise Aufbau entfallen. Zudem ist eine Biegesteifigkeit derart erhöht, dass eine Fertigung der Strukturen frei im Raum möglich ist.

Insbesondere durch den variablen Querschnitt bzw. die kontinuierliche Querschnittsänderung entsteht ein neuer Freiheitsgrad bei der Fertigung, beispielsweise zur Anwendung in der Architektur, im Formenbau, für Dichtungen oder für Design-Anwendungen.

Ausführungsbeispiele können auch wie folgt dargestellt werden.

Offenbart ist ein Extrusionsverfahren zur Herstellung von Hohlstrukturen mit variierenden Querschnitten, bzw. variablen Hohlquerschnitten, bestehend aus zumindest temporär plastisch verformbaren Extrusionsmaterialien, die zumindest abschnittsweise mit mindestens einem Wirkmedium in einer Kombinationseinheit gefüllt werden können und werkzeuglos hergestellt werden. Das Extrusionsverfahren ist insbesondere dadurch gekennzeichnet, dass der Querschnitt durch Einbringen dieser Wirkmedien über eine mit einer Regeleinheit verbundene Wirkmediumaktorik variiert werden kann.

In dem Extrusionsverfahren kann mindestens ein eingebrachtes Wirkmedium gasförmig sein und den Hohlkörper bzw. Hohlquerschnitt mit einem Innendruck beaufschlagen, der zu einer gezielten Änderung des Hohlquerschnitts führen kann.

In dem Extrusionsverfahren kann die Herstellung des Hohlkörpers bzw. Hohlquerschnitts kontinuierlich erfolgen, wobei auch das mindestens eine Wirkmedium zumindest abschnittsweise kontinuierlich zugeführt werden kann. Der Hohlkörper kann selbst als Gegenstand exprimiert werden, oder zum Einsatz im Bereich der additiven Fertigung vorgesehen sein bzw. eingesetzt werden.

In dem Extrusionsverfahren kann das zumindest abschnittsweise mindestens eine Wirkmedium zur Funktionsintegration, insbesondere als Indikatorfunktion oder Sensorfunktion, zur Mitbewirkung einer solchen Funktion oder zur zumindest abschnittsweisen Veränderung der Erzeugniseigenschaften, genutzt werden.

In dem Extrusionsverfahren können die Wirkmedien einzeln, gleichzeitig, nacheinander oder im Wechsel eingebracht werden, insbesondere, um ihre jeweiligen Eigenschaften zur Funktionsintegration einzusetzen.

In dem Extrusionsverfahren kann der Hohlquerschnitt mittels Wirkmedium zumindest abschnittsweise variabel temperiert werden, insbesondere, um die Dauer der Aushärtung zu beeinflussen.

In dem Extrusionsverfahren kann der Hohlquerschnitt nach dem Austritt aus der Kombinationseinheit mithilfe eines im inneren des Hohlquerschnitts befindlichen Formkörpers temporär stabilisiert werden, insbesondere in Form eines schlauchförmigen, flexiblen Körpers.

Zu den Vorteilen, die das vorgestellte Verfahren bietet, zählt insbesondere, dass bei der Herstellung Zeit und Material und somit Kosten eingespart werden können. Durch die Möglichkeit, den Querschnitt zu variieren, entsteht ein neuer Freiheitsgrad, der sowohl für technische Anwendungen (Leichtbau, Dichtungen, Verdrängungskörper im Bauwesen, Schall) oder gestalterische Anwendungen (Architektur/Fassaden, Beleuchtung) genutzt werden kann. Zudem kann das Wirkmedium in dem hergestellten Hohlkörper verbleiben und weiter genutzt werden (z.B. zur Isolation, Sensorik, Strukturüberwachung, Selbstheilung).

Das Verfahren lässt sich in bestehende Geräte ohne großen Aufwand integrieren. Insbesondere kann es in Vorrichtungen zum großformatigen 3D-Druck implementiert werden.

Im Bereich Architektur und Bauwesen können durch das Verfahren beispielsweise Verdrängungskörper für Leichtbau-Betondecken, Fassadenelemente sowie Bauteile zur Schallabsorption oder zur Beleuchtung erzeugt werden. Im Bereich von Dichtungen bzw. Dosieranlagen können querschnittsveränderliche hohle Dichtungen hergestellt werden. Wo Hohlkörper anstelle von Formen aus Vollmaterial eingesetzt werden können, lässt sich eine Materialeinsparung erreichen.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt Schritte eines Verfahrens gemäß der vorliegenden Erfindung.
- Fig. 2: zeigt eine schematische Darstellung einer Vorrichtung zur Ausführung des Verfahrens.
- Fig. 3: illustriert Aspekte einer Vorrichtung gemäß der vorliegenden Erfindung.
- Fig. 4: zeigt weitere Aspekte einer solchen Vorrichtung.

### DETAILLIERTE BESCHREIBUNG

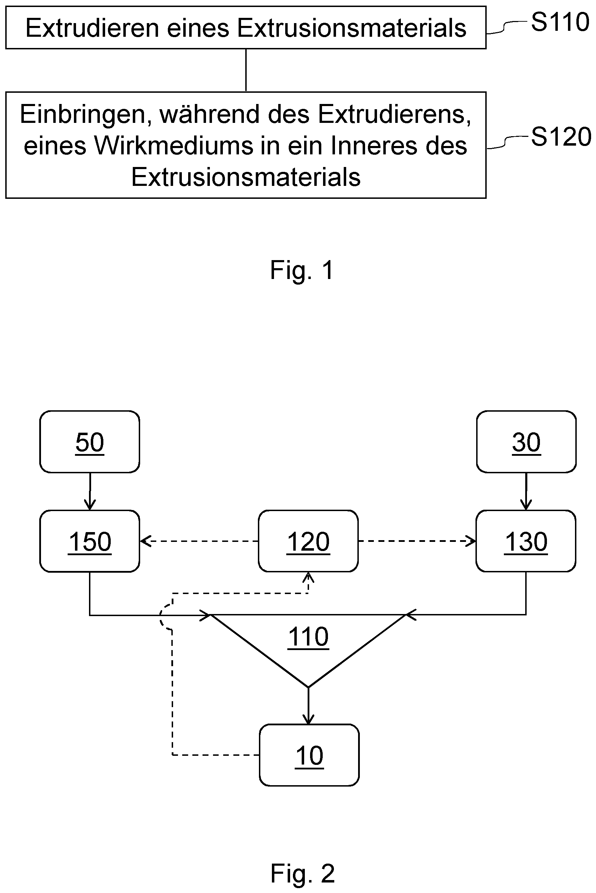

**Fig. 1** zeigt Schritte eines Verfahrens zum werkzeuglosen Herstellen einer Hohlstruktur, wobei die Hohlstruktur einen entlang einer Achse der Hohlstruktur variierenden Querschnitt aufweist. Das Verfahren umfasst ein Extrudieren S110 eines Extrusionsmaterials, und während des Extrudierens S110 ein Einbringen S120 eines Wirkmediums in ein Inneres des Extrusionsmaterials, um so die Hohlstruktur mit dem variierenden Querschnitt herzustellen.

In dem Verfahren kann das Einbringen S120 des Wirkmediums abschnittsweise erfolgen, um so eine effiziente Materialnutzung und eine gezielte Veränderung des Querschnitts während des Herstellungsprozesses zu erreichen. Durch den variierenden Querschnitt können Funktionen wie insbesondere Sollbruchstellen oder ein stellenweises Verstärken der Hohlstruktur erreicht werden, wodurch sich eine gezielte Veränderung der Bauteilfestigung ergibt.

Durch ein geeignetes Auswählen des Wirkmediums können weitere Funktionsintegrationen realisiert werden. Insbesondere können Photopolymere als Wirkmedium verwendet werden, um bei Rissbildung einen Selbstheilungseffekt in die fertiggestellte Hohlstruktur zu integrieren.

Durch ein Temperieren des Wirkmediums kann Einfluss auf einen Abkühlungsprozess des Extrusionsmaterials genommen werden, um Eigenschaften des Extrusionsmaterials wie Aushärtungszeit, Härte, Textur, Maßhaltigkeit und/oder Festigkeit zu verändern bzw. zu beeinflussen.

Basierend auf dem Wirkmedium kann nach dem Extrudieren S110 ein Stabilisieren der Hohlstruktur erfolgen. Insbesondere kann so eine Aufrechterhaltung des Hohlquerschnitts gesichert werden.

**Fig. 2** zeigt eine schematische Darstellung einer Vorrichtung zur Ausführung des Verfahrens zur Herstellung einer Hohlstruktur 10 mit variierendem Querschnitt. Ein Extrusionsmaterial 30 und ein Wirkmedium 50 können über eine entsprechende Extrusionsmaterialaktorik 130 bzw. eine Wirkmediumaktorik 150 in eine Extrusionsdüse 110 bzw. Kombinationseinheit gefördert werden. Abhängig von Eigenschaften des Extrusionsmaterials 30 und des Wirkmediums 50 entsteht ein variierbarer Querschnitt der Hohlstruktur 10. Um den Querschnitt gezielt zu verändern, können über eine Steuerungseinrichtung 120 bzw. Regeleinheit die Extrusionsmaterialaktorik 130 und die Wirkmediumaktorik gesteuert werden, um Volumenströme und Drücke des Extrusionsmaterials 30 und des Wirkmediums 50 zu regeln. In der Figur deuten durchgezogene Pfeile einen Materialfluss und gestrichelte Pfeile einen Informationsfluss zu einer elektronischen Kontrolle oder im Rahmen eines Regelkreises (z.B. als Feedback) an.

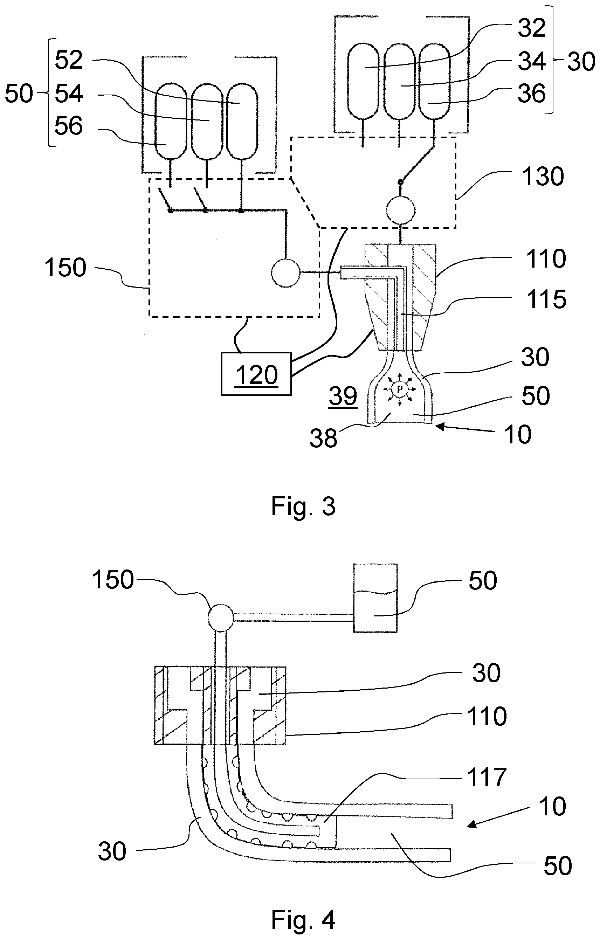

**Fig. 3** illustriert Aspekte einer Vorrichtung 100 zur werkzeuglosen Herstellung einer Hohlstruktur 10, wobei die Hohlstruktur 10 einen entlang einer Achse der Hohlstruktur variierenden Querschnitt aufweist. Die Vorrichtung 100 umfasst eine Kombinationseinheit bzw. eine Extrusionsdüse 110 mit einem Kern 115, ausgebildet, um eine Extrusion eines Extrusionsmaterials 30 um den Kern 115 durchzuführen, wobei der Kern 115 ausgebildet ist, um während der Extrusion ein Wirkmedium 50 in ein Inneres 38 des Extrusionsmaterials 30 einzubringen. Die Vorrichtung 100 umfasst weiter eine Steuerungseinrichtung 120, die ausgebildet ist, um das Extrusionsmaterial 30 durch die Extrusionsdüse 110 zu extrudieren und das Wirkmedium 50 einzubringen. Basierend auf der Extrusionsdüse 110 erfolgt das Einbringen S120 des Wirkmediums 50 während des Extrudierens S110 des Extrusionsmaterials 30, um so die Hohlstruktur 10 mit dem variierenden Querschnitt herzustellen.

Die Vorrichtung 100 umfasst dabei jeweils einen ersten Vorratsbehälter 32, 52 für feste Komponenten, einen zweiten Vorratsbehälter 34, 54 für flüssige Komponenten und einen dritten Vorratsbehälter 36, 56 für gasförmige Komponenten des Extrusionsmaterials 30 bzw. des Wirkmediums 50. Die Vorratsbehälter 32, 34, 36, 52, 54, 56 können dabei jeweils dasselbe Extrusionsmaterial 30 bzw. Wirkmedium 50 in unterschiedlichen Aggregatszuständen oder unterschiedliche Extrusionsmaterialien 30 und/oder Wirkmedien 30 enthalten. Es können auch innerhalb eines Aggregatszustands mehrere unterschiedliche Extrusionsmaterialien 30 oder Wirkmedien 50 vorgesehen sein.

Die Extrusionsdüse 110 umfasst in dem Kern 115 einen Kanal, durch den das Wirkmedium 50 in das Innere 38 des Extrusionsmaterials 30 eingebracht wird. Die Vorrichtung 100 kann ausgebildet sein, um Temperaturen, Öffnungsformen und/oder Drücke in der Extrusionsdüse 110 und/oder im Kern 115 einzustellen.

Die Vorrichtung 100 umfasst eine Extrusionsaktorik 130, die ausgebildet ist, um wahlweise Extrusionsmaterial 30 aus dem ersten Vorratsbehälter 32, dem zweiten Vorratsbehälter 34 oder dem dritten Vorratsbehälter 36 des Extrusionsmaterials 30 in die Extrusionsdüse 110 zu führen. Die Extrusionsmaterialaktorik 130 ist ausgebildet, um das Extrusionsmaterial 30 mit Druck zu beaufschlagen und einen Vorschub des Extrusionsmaterials 30 durch die Extrusionsdüse 110 um den Kern 115 herum zu bewirken.

Die Vorrichtung 100 umfasst eine Wirkmediumaktorik 150, die ausgebildet ist, um Mischungen von Wirkmedien 50 aus dem ersten Vorratsbehälter 52, dem zweiten Vorratsbehälter 54 und/oder dem dritten Vorratsbehälter 56 des Wirkmediums 50 in die Extrusionsdüse 110 zu führen. Die Wirkmediumaktorik 150 ist ausgebildet, um das Wirkmedium 50 mit Druck zu beaufschlagen und einen Vorschub des Wirkmediums 50 durch den Kern 115 der Extrusionsdüse 110 zu bewirken.

Die Steuerungseinrichtung 120 steuert die Extrusionsmaterialaktorik 130 und die Wirkmediumaktorik 150. In Ausführungsbeispielen steuert die Steuerungseinrichtung 120 auch die Extrusionsdüse 110 und führt so das offenbarte Verfahren zur werkzeuglosen Herstellung der Hohlstruktur 10 aus.

Das Wirkmedium 50 gelangt in das Innere 38 des Extrusionsmaterials. Basierend auf einer Wahl des Extrusionsmaterials 30 und des Wirkmediums 50 (oder der Wirkmedien 50) kann damit durch ein Anpassen einer Temperatur, des Drucks und/oder einer Volumenrate des Extrusionsmaterials 30 und/oder des Wirkmediums 50 der variierende Querschnitt erreicht werden.

Durch das Verfahren kann ein Strangdurchmesser der Hohlstruktur 10 bzw. des Querschnitts erreicht werden, der einem Vielfachen eines Durchmessers der Extrusionsdüse 110 entspricht. Der Strangdurchmesser kann variiert werden, um z.B. als gestalterisches Merkmal (z.B. in Hohlstrukturen 10 für die Architektur, Design) zu dienen, oder lastgerecht gewählt sein (z.B. in Hohlstrukturen für den Leichtbau).

Der fertige Hohlkörper 10 kann zumindest abschnittsweise mit Wirkmedien 50 gefüllt sein (z.B. mit Gas als Isolation, mit Flüssigkeit als Rissindikator); abschnittsweise kann er auch einen Hohlraum z.B. für eine Isolation oder zum Einsetzen einer Sensorik aufweisen.

Die Vorrichtung 100 kann ausgebildet sein, um ein Temperieren des Extrusionsmaterials 30 durch ein Temperiermedium in einem Äußeren 39 des Extrusionsmaterials 30 und/oder durch lokal eingebrachte Energie aus dem Äußeren 39 des Extrusionsmaterials 30 durchzuführen. Das Temperieren kann den variierenden Querschnitt mitbestimmen.

Das Temperieren aus dem Äußeren 39 und/oder eine Wahl der Temperatur des Wirkmediums 50 kann insbesondere für die Erzeugung von Überhängen eingesetzt werden. Eine gezielte Temperierung kann beispielsweise zu einer deutlichen Reduktion einer Aushärtedauer eingesetzt werden. Somit verfestigt sich das Extrusionsmaterial 30, ohne abzusinken.

Das Wirkmedium 50 bzw. einige oder alle eingesetzten Wirkmedien 50 können Photopolymere, ein thermochromes Material, ein solvatorchromes Material und/oder ein Phasenwechselmaterial, letzteres z.B. in Kapseln, umfassen. Die Vorrichtung 100 kann für ein wechselndes Einbringen S120 von Gas und Schaum als Wirkmedium 50 ausgebildet sein. Auf diese Weise können Eigenschaften der Hohlstruktur 10, bzw. Bauteileigenschaften, abschnittsweise selektiv verändert werden, da der mit Schaum gefüllte Querschnitt bessere Festigkeitseigenschaften als der mit Gas gefüllte Querschnitt besitzen kann. Eine Hohlstruktur 10 mit geringer Dichte kann so an kritischen Stellen von innen heraus mit Schaum schon während der Herstellung gestärkt werden.

**Fig. 4** zeigt weitere Aspekte einer Vorrichtung 100 zur werkzeuglosen Herstellung einer Hohlstruktur 10, wobei die Hohlstruktur 10 einen entlang einer Achse der Hohlstruktur 10 variierenden Querschnitt aufweist. Hier umfasst der Kern 115 einen flexiblen Formkörper 117, der aus einer Extrusionsöffnung der Extrusionsdüse 110 herausragt. Der Formkörper 117 ist ausgebildet, um den Querschnitt bzw. das Extrusionsmaterial 30 zusätzlich zu stabilisieren.

Ein Vorteil der hier gezeigten Vorrichtung 100 liegt in der Möglichkeit, die Hohlstruktur 10 direkt nach der Extrusion zu stabilisieren, woraus eine höhere Prozesssicherheit, insbesondere für die Nutzung in additiven Fertigungsprozessen, entstehen kann. Insbesondere können ein Herstellen von Radien sowie ein angewinkeltes Ablegen unterstützt werden.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Hohlkörper
- 30: Extrusionsmaterial
- 32, 34, 36: Vorratsbehälter
- 38: Inneres
- 39: Äußeres
- 50: Wirkmedium
- 52, 54, 56: Vorratsbehälter
- 100: Vorrichtung
- 110: Extrusionsdüse bzw. Kombinationseinheit
- 115: Kern
- 117: Formkörper
- 120: Steuerungseinrichtung
- 130: Extrusionsmaterialaktorik
- 150: Wirkmediumaktorik
- S110: Extrudieren
- S120: Einbringen

## Patentansprüche

1. Ein Verfahren zum werkzeuglosen Herstellen einer Hohlstruktur (10), wobei die Hohlstruktur (10) einen entlang einer Achse der Hohlstruktur (10) variierenden Querschnitt aufweist, das Verfahren umfasst:
Extrudieren (S110) eines Extrusionsmaterials (30); und
Einbringen (S120), während des Extrudierens (S110), eines Wirkmediums (50) in ein Inneres (38) des Extrusionsmaterials (30), um basierend darauf die Hohlstruktur (10) mit dem variierenden Querschnitt herzustellen.

2. Das Verfahren nach Anspruch 1, wobei das Verfahren weiter ein schichtweises Ablegen der Hohlstruktur (10) für ein additives Fertigen umfasst.

3. Das Verfahren nach einem der vorhergehenden Ansprüche, wobei der variierende Querschnitt auf zumindest einem der folgenden basiert:
- dem Extrudieren (S110) des Extrusionsmaterials (30) mit einer variierenden Geschwindigkeit,
- einer Bewegung einer formgebenden Öffnung,
- dem Einbringen (S110) des Wirkmediums (50) mit einem variierenden Volumenstrom,
- dem Einbringen (S110) des Wirkmediums (50) mit einem variierenden Druck,
- dem Einbringen (S110) des Wirkmediums (50) mit einer variierenden Temperatur,
- einem Wechsel des Wirkmediums (50) oder einer Zusammensetzung des Wirkmediums (50).

4. Das Verfahren nach einem der vorhergehenden Ansprüche, wobei das Extrusionsmaterial (30) ein thermoplastisches Material ist.

5. Das Verfahren nach einem der vorhergehenden Ansprüche, wobei das Extrusionsmaterial (30) ein Kunststoffdraht ist.

6. Das Verfahren nach einem der vorhergehenden Ansprüche, wobei das Verfahren ein Temperieren des Extrusionsmaterials (30) durch ein Temperiermedium in einem Äußeren (39) des Extrusionsmaterials (30) und/oder durch lokal eingebrachte Energie aus dem Äußeren (39) des Extrusionsmaterials (30) umfasst, und der variierende Querschnitt auf dem Temperieren basiert.

7. Das Verfahren nach einem der vorhergehenden Ansprüche, wobei das Wirkmedium (50) zumindest eines der folgenden umfasst:
- ein Photopolymer,
- ein thermochromes Material,
- ein solvatorchromes Material,
- ein Phasenwechselmaterial,
- ein Gas oder ein Gasgemisch.

8. Das Verfahren nach einem der vorhergehenden Ansprüche, wobei das Wirkmedium (50) ein in Wasser oder Limonen löslicher Stoff und/oder ein Thermoplast ist.

9. Das Verfahren nach einem der vorhergehenden Ansprüche, wobei das Wirkmedium (50) ausgebildet ist, um einen Schmelzprozess an einer Oberfläche des Extrusionsmaterials (30) zu bewirken.

10. Eine Vorrichtung (100) zur werkzeuglosen Herstellung einer Hohlstruktur (10), wobei die Hohlstruktur (10) einen entlang einer Achse der Hohlstruktur (10) variierenden Querschnitt aufweist, die Vorrichtung (100) umfasst:
eine Extrusionsdüse (110), die ausgebildet ist, um eine Extrusion eines Extrusionsmaterials (30) durchzuführen, und um während der Extrusion ein Wirkmedium (50) in ein Inneres des Extrusionsmaterials (30) einzubringen; und
eine Steuerungseinrichtung (120), die ausgebildet ist, um das Extrusionsmaterial (30) durch die Extrusionsdüse (110) zu extrudieren und das Wirkmedium (50) einzubringen, und um basierend darauf die Hohlstruktur (10) mit dem variierenden Querschnitt herzustellen.

11. Die Vorrichtung nach Anspruch 10, wobei die Extrusionsdüse einen Kern (115) umfasst und ausgebildet ist, die Extrusion des Extrusionsmaterials (30) um den Kern (115) herum durchzuführen.

12. Die Vorrichtung nach Anspruch 11, wobei der Kern (115) einen flexiblen Formkörper (117) aufweist, der aus einer Extrusionsöffnung der Extrusionsdüse (110) herausragt.

13. Ein Computerprogrammprodukt mit darauf gespeicherten Instruktionen, die bei Ausführung der Instruktionen durch eine datenverarbeitende Maschine diese veranlassen, ein Verfahren nach einem der Ansprüche 1 bis 9 durchzuführen.
